# EUROPÄISCHE PATENTSCHRIFT

(11) **EP 3 247 923 B1**
(45) Veröffentlichungstag und Bekanntmachung des Hinweises auf die Patenterteilung: **19.08.2020**
(21) Anmeldenummer: 16700301.1
(22) Anmeldetag: 11.01.2016
(51) Int. Cl.: F16H 57/022, F16C 25/06, F16H 57/038

(54) **GETRIEBE UND VERFAHREN ZUR EINSTELLUNG DES VERDREHSPIELS DIESES GETRIEBES**
TRANSMISSION AND METHOD FOR ADJUSTING THE CIRCUMFERENTIAL BACKLASH OF THE TRANSMISSION
TRANSMISSION ET PROCÉDÉ PERMETTANT DE RÉGLER LE JEU DE TORSION DE LADITE TRANSMISSION

(30) Priorität: 19.01.2015 DE 102015200741
(43) Veröffentlichungstag der Anmeldung: 29.11.2017
(73) Patentinhaber: Lenze Drives GmbH, 32699 Extertal (DE)
(72) Erfinder: UHLENBROK, Horst, 32699 Extertal (DE); HASCHKE, Mirko, 32699 Extertal (DE)
(74) Vertreter: Patentanwälte Ruff, Wilhelm, Beier, Dauster & Partner mbB
(86) Internationale Anmeldenummer: PCT/EP2016/050348
(87) Internationale Veröffentlichungsnummer: WO 2016/116313

(56) Entgegenhaltungen:
- WO-A1-02/093039
- WO-A1-2007/115076
- DE-A1-102008 042 608
- US-A- 1 894 927
- US-A- 2 386 946
- US-A- 3 260 132
- US-A1- 2009 145 683

## Beschreibung

### Anwendungsgebiet und Stand der Technik

Die Erfindung betrifft ein Getriebe mit zwei miteinander kämmenden Kegelzahnrädern, entsprechend dem Oberbegriff des Anspruchs 1 und wie es aus der US1894927A bekannt ist.

Solche Getriebe finden für vielfältige maschinenbauliche Anwendungsfelder Verwendung. Durch die beiden Kegelzahnräder wird ein Drehmoment von einer Welle auf eine hierzu nicht parallele zweite Welle übertragen.

Bei solchen Getrieben ist es üblicherweise gewünscht, das Verdrehspiel, also die Drehbarkeit einer der Wellen bei nichtrotierender zweiter Welle und/oder das axiale Spiel oder die axiale Vorspannung einer Welle fallweise einzustellen. Dabei ist es erforderlich, diese Parameter möglichst problemlos auch nach Montage des Getriebes einstellen zu können.

Der hierbei bislang übliche Weg sieht vor, eine der Welle axial verlagerbar zu gestalten. Dies erfolgt üblicherweise dadurch, dass außenseitig der jeweiligen Außenringe der Wälzlager, durch die diese Welle gelagert ist, Abstandsscheiben vorgesehen sind, durch die sich der Außenring an einem am Gehäuse axial gesicherten Sicherungsring abstützt. Durch die Auswahl und die zu verwendenden Anzahl und Art der Abstandsscheiben kann der Außenring des jeweiligen Wälzlagers relativ zur Axiallage des Sicherungsrings beeinflusst werden. Fallweise können hierbei auch mehrere Abstandsscheiben Verwendung finden, die gemeinsam die gewünschte Position in Axialrichtung gewährleisten. Eine entsprechende Gestaltung ist aus US 1,894,928 bekannt.

Üblicherweise werden hierbei an zwei meist in X-Anordnung angeordneten Wälzlagern korrespondierend zueinander Passscheiben eingefügt bzw. nicht eingefügt, so dass gegenüber den Sicherungsringen jeweils eine definierte Lage erzielt wird.

Die beschriebene Vorgehensweise ist vergleichsweise aufwändig. Zur Anpassung eines Getriebes muss der Sicherungsring entfernt werden, die gewählten Abstandsscheiben, die gemeinsam die gewünschte Dicke aufweisen, müssen eingefügt werden und der Sicherungsring muss wieder eingesetzt werden.

Neben der aufwändigen Montage der der mitunter nur unbefriedigend möglichen Auswahl der Abstandsscheiben hat sich auch als nachteilige herausgestellt, dass die Abstandsscheiben sich im Betrieb setzen und die durch sie eingestellte Position des Außenrings des jeweiligen Lagers dadurch seine Soll-Vorgabe nicht mehr einhalten.

Aus US 3,260,132 ist ein Differentialgetriebe bekannt, wobei ein Differentialkäfig axial verlagerbar gelagert ist, wobei für eine Verlagerung des Differentialkäfigs an beiden Enden jeweils einen in einem Gehäuse angeordnete Hülse und ein in der Hülse eingesetzter Ring vorgesehen ist, wobei der Ring relativ zu der Hülse für eine Lagereinstellung verlagerbar ist. Differentialgetriebe sind weiter aus WO 2007/115076 A1, US 2009/0145683 A1 oder WO 02/093039 A1 bekannt.

US 2,386,946 zeigt eine Antriebsrollenvorrichtung, wobei die Antriebsrolle mittels eines Kegelradgetriebes angetrieben wird und in Axialrichtung verstellbar in einem Rahmen gelagert ist. Eine Einstellvorrichtung für die axiale Lage der Antriebsolle umfasst zwei an gegenüberliegenden Seiten angeordnete Deckel, welche jeweils ein Gewinde aufweisen. Die Deckel sind mittels lösbarer Feststellschrauben lagefixiert.

### Aufgabe und Lösung

Aufgabe der Erfindung ist es, ein gattungsgemäßes Getriebe dahingehend weiterzubilden, dass dies eine einfache Einstellbarkeit der Position eines der Kegelräder in Axialrichtung gestattet.

Erfindungsgemäß wird diese Aufgabe durch ein Getriebe nach Anspruch 1 gelöst.

Ein erfindungsgemäßes Getriebe verfügt über ein Gehäuse, innerhalb dessen die beiden Kegelzahnräder angeordnet sind. Dieses erste und zweite Kegelzahnrad sind jeweils drehfest und in axial definierter Position an einer ersten bzw. zweiten Welle befestigt und befinden sich im kämmenden Eingriff miteinander.

Die erste Welle mit dem ersten Kegelzahnrad ist axial einstellbar ausgebildet. Diese Einstellung erfolgt über zwei Wälzlager, mittels derer die erste Welle am Gehäuse gelagert ist.

Die Innenringe der beiden Wälzlager, bei denen es sich vorzugsweise um Wälzlager in angestellter Lagerung, insbesondere um Kegelwälzlager in X-Anordnung, handelt, befinden sich in axial definierter Position an der ersten Welle. Vorzugsweise sind hierfür in der ersten Welle Absätze vorgesehen, an denen die jeweiligen Innenringe anliegen.

Die Außenringe der Wälzlager stützen sich radial an einer nach innen weisenden Stützfläche des Gehäuses ab. Sie sind dabei an der Stützfläche und in aufeinander zu weisender Richtung nicht bewegungslimitiert. Lediglich außenseitig der jeweiligen Außenringe sind Einstelleinrichtungen vorgesehen, um die axiale Lage der jeweiligen Außenringe einstellen zu können. Gemeinsam gestatten also alleine diese axial außenseitig angeordneten Einstelleinrichtungen die axiale Verlagerung der ersten Welle und mit ihr des ersten Kegelzahnrades.

Die Einstellvorrichtungen verfügen hierfür jeweils über ein Einstellelement, welches ein Außengewinde aufweist, mittels dessen das Einstellelement in ein gehäuseseitiges Innengewinde eingeschraubt ist. Das Einstellelement liegt unmittelbar oder vermittels eines vorzugsweise in Axialrichtung starren Zwischenelementes am Außenring des jeweiligen Wälzlagers an und definiert dadurch dessen Axialposition.

Das Außengewinde und das Innengewinde sind als Feingewinde ausgebildet. Die Einstellelemente sind dadurch hinsichtlich ihrer Axiallage sehr genau einstellbar. Die Steigung der Gewinde, also die Distanz in axialer Richtung, die durch eine vollständige 360°-Drehung eines Einstellelements gegenüber dem Gehäuse erzielt wird, liegt vorzugsweise bei maximal 3 mm, vorzugsweise bei maximal 1,5 mm, insbesondere vorzugsweise bei maximal 0,75 mm. Eine noch feinere Einstellmöglichkeit ist gegeben, wenn die Steigung bei maximal 0,5 mm, insbesondere vorzugsweise bei 0,35 mm liegt.

Das Einstellelement ist vorzugsweise von einer Außenseite in das Gehäuse eingeschraubt, so dass auch bei montiertem Getriebe eine Verstellung möglich ist.

So ist es insbesondere möglich, das Verdrehspiel der Kegelzahnräder einzustellen, indem die beiden Einstelleinrichtungen an den beiden Wälzlagern der ersten Welle gemeinsam in gleichem Maße und in gleiche Richtung gedreht werden. Hierdurch werden bei gleichbleibender Verspannung der Welle die beiden Außenringe der Wälzlager gemeinsam axial verlagert, bis das gewünschte Verdrehspiel erreicht ist.

Die Einstellelemente sind als geschlossene Deckel ausgebildet, die den Aufnahmeraum der Wellen und der Kegelräder vollständig verschließen.

Es kann von Vorteil sein, wenn zwischen dem Einstellelement und der nach innen weisenden Gehäusewandung eine Dichtung vorgesehen ist.

Um die Einstellelemente dosiert im Gewinde drehen zu können und hierdurch die Axiallage einstellen zu können, verfügt dieses vorzugsweise über einen unrunden Handhabungsbereich. Es sind also Flächen auf der nach außen vom Wälzlager weg weisenden Seite des Einstellelements vorgesehen, an denen ein Drehmoment formschlüssig eingekoppelt werden kann. Besonders von Vorteil ist hier eine Gestaltung, bei der das Einstellelement mit einem Außen- oder Innenvierkant oder -sechskant versehen ist.

Da die Einstellung der Einstellelemente üblicherweise ein einmaliger Vorgang ist, ist die Verwendung einer Klebeverbindung vorgesehen. Das Einstellelement und das Gehäuse werden dabei miteinander im Bereich des Gewindes oder benachbart hierzu mittels des Klebstoffes verbunden, so dass eine rotative Relativbewegung und somit eine axiale Verstellung des Einstellelements unterbunden ist.

Eine solche Klebeverbindung dient gleichzeitig der wirksamen Abdichtung zwischen Gehäuse und Einstellelement. Zusätzlich kann jedoch auch eine Dichtung, beispielsweise ein O-Ring, zwischen Gehäuse und Einstellelement angeordnet sein.

Grundsätzlich wird es als bevorzugt angesehen, wenn beide Einstellelemente unmittelbar auf die Außenringe der beiden Wälzlager wirken, so dass die Einstelleinrichtungen und die Wälzlager in Axialrichtung stets lagefest zueinander verbleiben. Dies wird durch unmittelbares Anliegen des jeweiligen Außenrings des Wälzlagers am Einstellelement oder durch Vorsehen eines starren und axial unkomprimierbaren Zwischenelements zwischen Einstellelement und Außenring erzielt.

Denkbar ist jedoch auch eine Gestaltung, bei der nur eines der Wälzlager eine solche Lagefestigkeit gewährleistet, während beim zweiten Wälzlager zwischen dem Einstellelement und dem Außenringe eine Federeinrichtung vorgesehen ist, beispielsweise umfassend eine Tellerfeder. Bei einer solchen Gestaltung ist das Lager mit der Federeinrichtung vorzugsweise das dem Kegelzahnrad entferntere oder das auf der verjüngten Seite des Kegelrades vorgesehene Wälzlager. Die Einstellung des Verdrehspiels kann somit in begrenztem Maße alleine durch Verdrehen eines Einstellelements bei gleichzeitiger Veränderung der Vorspannung bewirkt werden.

### Kurzbeschreibung der Zeichnungen

Die Erfindung wird nachfolgend anhand eines Ausführungsbeispiels beschrieben, welches in den Figuren dargestellt ist.
- Figur 1: zeigt ein erfindungsgemäßes Getriebe.
- Figur 2 und 3: zeigen in vergrößerter Darstellung erfindungswesentliche Teilbereiche des Getriebes gemäß der Figur 1.
- Figur 4: zeigt in perspektivischer Darstellung ein Einstellelement des Getriebes gemäß den Figuren 1 bis 3.

### Detaillierte Beschreibung der Ausführungsbeispiele

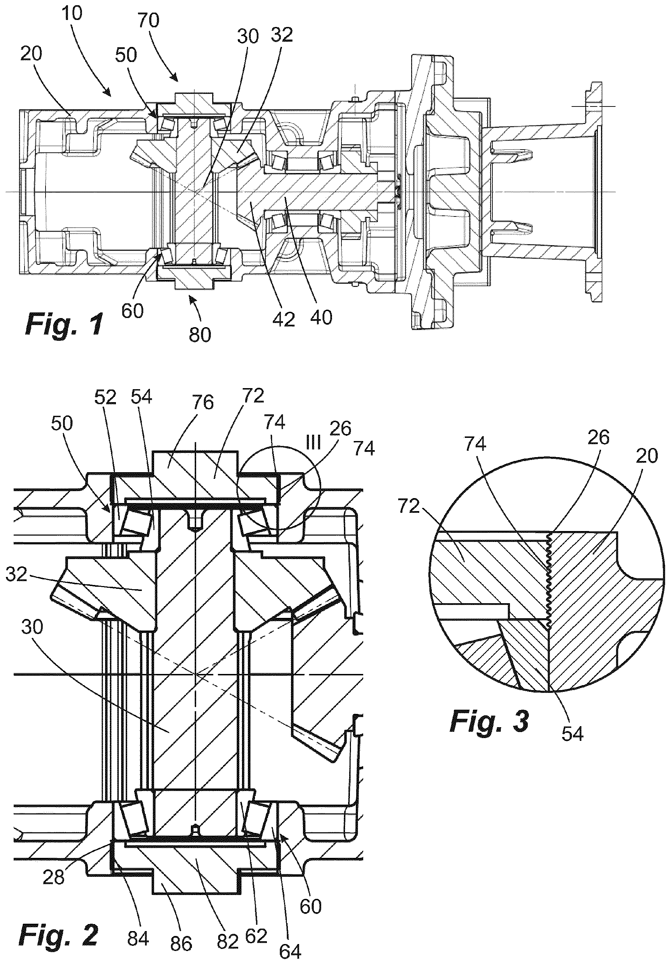

Figur 1 zeigt ein erfindungsgemäßes Getriebe 10, welches sich durch zwei miteinander kämmende Kegelzahnräder 32, 42 auszeichnet. Figuren 2 und 3 zeigen Details dieses Getriebes in vergrößerter Darstellung.

Das Getriebe 10 verfügt über ein Gehäuse 20, wobei unter Gehäuse alle nach Montage zueinander ortsfesten Abschnitte des Getriebes 10 angesehen werden. Das Gehäuse 20 definiert einen Gehäuseinnenraum, innerhalb dessen zwei zueinander nicht parallele Wellen 30, 40 gelagert sind. An diesen Wellen 30, 40 sind die beiden miteinander kämmenden Kegelzahnräder 32, 42 befestigt.

Um das Verdrehspiel der Kegelzahnräder 32, 42 in Abhängigkeit des Anwendungsgebietes einstellen zu können, ist die erste Welle 30 mittels Einstellvorrichtungen 70, 80 axial verlagerbar. Die Funktionsweise dieser Einstellvorrichtungen 70, 80 wird nachfolgend erläutert.

Die erste Welle 30 ist mittels zweier Wälzlager 50, 60 gelagert, die jeweils als Kegelrollenlager ausgebildet sind und die in einer angestellten X-Lagerung angeordnet sind.

Die Innenringe 52, 62 dieser Wälzlager 50, 60 sind auf die erste Welle 30 aufgeschoben und liegen jeweils an Absätzen der Welle 30 an, so dass ihre Relativposition zueinander und zum Kegelzahnrad 32 in axialer Richtung vorgegeben ist.

Die Außenringe 54, 64 der Wälzlager 50, 60 liegen an zylindrischen Stützflächen des Gehäuses 20 an. Ihre Bewegung aufeinander zu ist lediglich über die Wälzkörper, die Innenringe 52, 62 und die Welle 30 begrenzt. Innenseitige Anschläge am Gehäuse sind nicht vorgesehen. Die Bewegung der Außenringe 54, 64 nach außen ist durch die Einstellvorrichtungen 70, 80 limitiert.

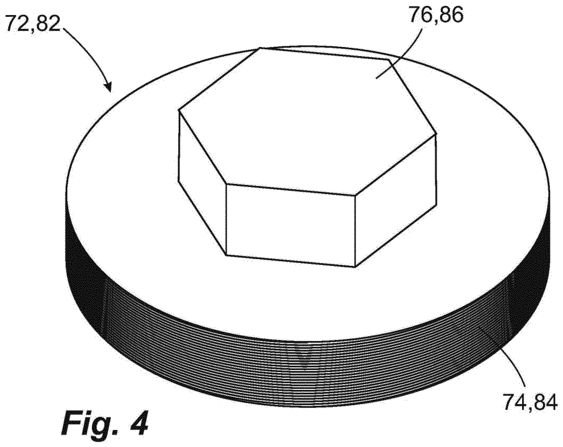

Jeder der Einstellvorrichtungen 70, 80 verfügt über ein Einstellelement 72, 82, das in perspektivischer Darstellung der Fig. 4 entnommen werden kann.

Die Einstellelemente 72, 82 bilden Deckel mit einem Außengewinde 74, 84, die auf gegenüberliegenden Seiten des Gehäuses 20 beidseitig der Welle 30 in gehäuseseitige Innengewinde 26, 28 eingeschraubt sind. In einem äußeren Randbereich drücken die Einstellelemente jeweils auf die Außenringe 54, 64 der Wälzlager 50, 60, so dass deren Bewegung nach außen limitiert ist und die Wälzlager über die Welle 30 gegeneinander verspannt werden können.

An ihrer Außenseite weisen die Einstellelemente 72, 82 jeweils einen Handhabungsbereich in Form eines Außensechskants 76, 86 auf, so dass sie mit allgemein verfügbarem Werkzeug gedreht und dadurch axial verstellt werden können.

Die Montage erfolgt vorzugsweise derart, dass nach Anordnung der Welle 30 und der Wälzlager 50, 60 im Gehäuse zunächst ein erstes Einstellelement 72, 82 eingeschraubt wird. Anschließend wird das gegenüberliegende andere Einstellelement eingeschraubt, wobei ein Momentenschlüssel verwendet werden kann, so dass über die Wälzlager 50, 60 eine definierte Vorspannung in der Welle 30 erzielt wird.

Ist dies geschehen, so kann anschließend die Einstellung des Verdrehspiels erfolgen, indem die beiden Einstellelemente 72, 82 vorzugsweise gleichzeitig und in gleichem Maße gedreht werden. Hierdurch drückt eines der Einstellelemente axial auf den Außenring des ihm zugeordnete Wälzlagers und verschiebt dieses gemeinsam mit der Welle 30, während das andere Einstellelement gleichzeitig den für diese Verschiebung erforderlichen axialen Raum schafft. Da die Gewinde 26, 28, 74, 84 als Feingewinde ausgebildet sind, kann diese Verstellung sehr genau und dosiert erfolgen. Die voreingestellte Verspannung der Welle 30 bleibt aufgrund der axial gleichen Bewegung der Einstellelemente 72, 82 unverändert erhalten.

Ist das gewünschte Verdrehspiel erreicht, erfolgt abschließend eine Drehsicherung der Einstellelemente 72, 82 durch Verkleben.

Ist das gewünschte Verdrehspiel erreicht, erfolgt vorzugsweise abschließend eine Drehsicherung der Einstellelemente 72, 82. Dies kann durch Verkleben oder auch mittels eines Konterelements erfolgen.

## Patentansprüche

1. Getriebe (10) mit den folgenden Merkmalen:
a. das Getriebe (10) verfügt über ein Gehäuse (20), und
b. das Getriebe (10) verfügt über eine erste und eine zweite Welle (30, 40), die jeweils über ein Kegelzahnrad (32, 42) verfügen, und
c. die beiden Kegelzahnräder (32, 42) befinden sich in kämmendem Eingriff miteinander, und
d. die erste Welle (30) mit einem ersten Kegelzahnrad (32) ist als axial einstellbare Welle (30) ausgebildet und hierfür mit zwei Wälzlagern (50, 60) beidseitig des Kegelzahnrades (32) gelagert,
e. die Wälzlager (50, 60) verfügen jeweils über einen wellenseitigen Innenring (52, 62) und einen gehäuseseitigen Außenring (54, 64),
f. die wellenseitigen Innenringe (52, 62) sind in definierter Axialposition an der ersten Welle (30) vorgesehen, und
g. die gehäuseseitigen Außenringe (54, 64) der Wälzlager (50, 60) sind jeweils auf einer gehäuseseitigen Stützfläche geführt und gegen eine Bewegung aufeinander zu lediglich über die Innenringe (52, 62) und die Welle (30) begrenzt, und
h. die gehäuseseitigen Außenringe (54, 64) der Wälzlager (50, 60) sind auf der dem Kegelzahnrad (32) abgewandten Seite jeweils durch eine Einstellvorrichtung (70, 80) hinsichtlich ihrer Axiallage einstellbar,
i. mindestens eines der Einstellelemente (72, 82) ist als geschlossener Deckel ausgebildet.
**gekennzeichnet durch** die Merkmale:
j. die Einstellvorrichtungen (70, 80) verfügen jeweils auf der dem Kegelzahnrad (32) abgewandten Seite des jeweiligen Außenrings (54, 64) über ein Einstellelement (72, 82) mit einem Außengewinde (74, 84), welches in ein gehäuseseitiges Innengewinde (26, 28) eingesetzt ist,
k. das Innengewinde (26, 28) und das Außengewinde (74, 84) sind als Feingewinde ausgebildet, und
l. mindestens eines der Einstellelemente (72, 82) ist durch eine Klebeverbindung ortsfest zum Gehäuse (20) fixiert, so dass eine rotative Relativbewegung und somit eine axiale Verstellung des Einstellelements (72, 82) unterbunden ist.

2. Getriebe (10) nach einem der vorstehenden Ansprüche mit dem Merkmal:
a. die Einstellelemente (72, 82) sind bei montiertem Getriebe (10) von einer Außenseite des Gehäuses (20) aus zugänglich.

3. Getriebe (10) nach einem der vorstehenden Ansprüche mit dem Merkmal;
a. mindestens eines der Einstellelemente (72, 82) weist einen unrunden Handhabungsbereich (76, 86) zur Einbringung eines Einstell-Drehmoments auf, vorzugsweise mit mindestens zwei zueinander parallelen Momenteneinkopplungsflächen, insbesondere vorzugsweise mit einem Innen- oder Außensechskant oder einem Innen- oder Außenvierkant.

4. Getriebe (10) nach einem der vorstehenden Ansprüche mit dem Merkmal:
a. zwischen mindestens einem der Einstellelemente und dem Gehäuse eine Dichtung vorgesehen ist, insbesondere in Art eines O-Rings oder eines anderen umlaufenden Dichtelements aus elastisch verformbaren Material.

5. Getriebe (10) nach einem der vorstehenden Ansprüche mit dem Merkmal
a. zwischen einem der Einstellelemente und dem zugeordneten Außenring des Wälzlagers ist eine axial wirkende Federeinrichtung vorgesehen.

6. Getriebe (10) nach einem der vorstehenden Ansprüche mit dem Merkmal:
a. die beiden Wälzlager (50, 60) bilden eine angestellte Lagerung, vorzugsweise in X-Anordnung.

7. Getriebe (10) nach einem der vorstehenden Ansprüche mit dem Merkmal:
a. die Wälzlager (50, 60) sind Kegelrollenlager.

8. Getriebe (10) nach einem der vorstehenden Ansprüche mit dem folgenden Merkmal:
a. das Innengewinde (26, 28) und das Außengewinde (74, 84) sind als Feingewinde mit einer Steigung von maximal 3 mm ausgebildet.

9. Getriebe (10) nach einem der vorstehenden Ansprüche mit dem folgenden Merkmal:
a. das Innengewinde (26, 28) und das Außengewinde (74, 84) sind als Feingewinde mit einer Steigung von maximal 1,5 mm ausgebildet.

10. Getriebe (10) nach einem der vorstehenden Ansprüche mit dem folgenden Merkmal:
a. das Innengewinde (26, 28) und das Außengewinde (74, 84) sind als Feingewinde mit einer Steigung von maximal 0,75 mm ausgebildet.

11. Getriebe (10) nach einem der vorstehenden Ansprüche mit dem folgenden Merkmal:
a. das Innengewinde (26, 28) und das Außengewinde (74, 84) sind als Feingewinde mit einer Steigung von maximal 0,5 mm ausgebildet.

12. Getriebe (10) nach einem der vorstehenden Ansprüche mit dem folgenden Merkmal:
a. das Innengewinde (26, 28) und das Außengewinde (74, 84) sind als Feingewinde mit einer Steigung von maximal 0,35 mm.

13. Verfahren zum Einstellen des Verdrehspiels eines Getriebes nach einem der vorstehenden Ansprüche mit den folgenden Schritten:
a. die Welle (30) wird durch Einschrauben der beiden Einstellelemente (72, 82) axial lagefixiert
b. die Einstellelemente (72, 82) werden synchron gedreht, um über die Gewinde (74, 84, 26, 28) die Welle bei gleichbleibender Vorspannung der Welle axial zu verlagern, und
c. mindestens eines der Einstellelemente (72, 82) wird durch eine Klebeverbindung ortsfest zum Gehäuse (20) fixiert, so dass eine rotative Relativbewegung und somit eine axiale Verstellung des Einstellelements (72, 82) unterbunden wird.

## Claims

1. Transmission (10) having the following features:
a. the transmission (10) has a housing (20), and
b. the transmission (10) has a first and a second shaft (30, 40), each of which has a bevel gearwheel (32, 42), and
c. the two bevel gearwheels (32, 42) are in meshing engagement with one another, and
d. the first shaft (30) with a first bevel gearwheel (32) is designed as an axially adjustable shaft (30) and, for this purpose, is supported by two rolling bearings (50, 60) on both sides of the bevel gearwheel (32),
e. each of the rolling bearings (50, 60) has a shaft-side inner ring (52, 62) and a housing-side outer ring (54, 64),
f. the shaft-side inner rings (52, 62) are provided in a defined axial position on the first shaft (30), and
g. the housing-side outer rings (54, 64) of the rolling bearings (50, 60) are guided on respective housing-side support surfaces and are restricted from moving toward one another solely by the inner rings (52, 62) and the shaft (30), and
h. the axial position of the housing-side outer rings (54, 64) of the rolling bearings (50, 60) can be adjusted on the side facing away from the bevel gearwheel (32) by respective adjusting devices (70, 80),
i. at least one of the adjusting elements (72, 82) is designed as a closed cover,
**characterized by** the features:
j. each of the adjusting devices (70, 80) has an adjusting element (72, 82) with an external thread (74, 84) on the side of the respective outer ring (54, 64) facing away from the bevel gearwheel (32), said external thread being inserted into an internal thread (26, 28) on the housing side,
k. the internal thread (26, 28) and the external thread (74, 84) are designed as fine threads, and
I. at least one of the adjusting elements (72, 82) is fixed in position relative to the housing (20) by an adhesive joint, such that a rotary relative motion and thus axial adjustment of the adjusting element (72, 82) is prevented.

2. Transmission (10) according to any of the preceding claims, having the feature:
a. the adjusting elements (72, 82) are accessible from an outside of the housing (20) with the transmission (10) assembled.

3. Transmission (10) according to any of the preceding claims, having the feature:
a. at least one of the adjusting elements (72, 82) has a noncircular handling region (76, 86) for introducing an adjusting torque, preferably having at least two mutually parallel torque introduction surfaces, in particular preferably having an internal or external hexagonal profile or an internal or external square profile.

4. Transmission (10) according to any of the preceding claims, having the feature:
a. a seal, in particular in the form of an O-ring or of some other encircling sealing element composed of elastically deformable material, is provided between at least one of the adjusting elements and the housing.

5. Transmission (10) according to any of the preceding claims, having the feature:
a. an axially acting spring device is provided between one of the adjusting elements and the associated outer ring of the rolling bearing.

6. Transmission (10) according to any of the preceding claims, having the feature:
a. the two rolling bearings (50, 60) form a preloaded support arrangement, preferably in an X arrangement.

7. Transmission (10) according to any of the preceding claims, having the feature:
a. the rolling bearings (50, 60) are taper roller bearings.

8. Transmission (10) according to any of the preceding claims, having the feature:
a. the internal thread (26, 28) and the external thread (74, 84) are designed as fine threads with a pitch of at most 3 mm.

9. Transmission (10) according to any of the preceding claims, having the feature:
a. the internal thread (26, 28) and the external thread (74, 84) are designed as fine threads with a pitch of at most 1.5 mm.

10. Transmission (10) according to any of the preceding claims, having the feature:
a. the internal thread (26, 28) and the external thread (74, 84) are designed as fine threads with a pitch of at most 0.75 mm.

11. Transmission (10) according to any of the preceding claims, having the feature:
a. the internal thread (26, 28) and the external thread (74, 84) are designed as fine threads with a pitch of at most 0.5 mm.

12. Transmission (10) according to any of the preceding claims, having the feature:
a. the internal thread (26, 28) and the external thread (74, 84) are designed as fine threads with a pitch of at most 0.35 mm.

13. Method for adjusting the circumferential backlash of a transmission according to any of the preceding claims, having the following steps:
a. the shaft (30) is fixed axially in position by screwing in the two adjusting elements (72, 82),
b. the adjusting elements (72, 82) are rotated synchronously in order to move the shaft axially by means of the threads (74, 84, 26, 28) while keeping the preload on the shaft constant, and
c. at least one of the adjusting elements (72, 82) is fixed in position relative to the housing (20) by an adhesive joint, such that a rotary relative motion and thus axial adjustment of the adjusting element (72, 82) is prevented.

## Revendications

1. Transmission (10), comprenant les caractéristiques suivantes :
a. la transmission (10) dispose d'un boîtier (20), et
b. la transmission (10) dispose d'un premier et d'un deuxième arbre (30, 40), qui disposent chacun d'un pignon conique (32, 42), et
c. les deux pignons coniques (32, 42) se trouvent en engagement d'engrènement l'un avec l'autre, et
d. le premier arbre (30) est réalisé avec un premier pignon conique (32) en tant qu'arbre ajustable axialement (30) et est supporté pour cela avec deux paliers à roulements (50, 60) de part et d'autre du pignon conique (32),
e. les paliers à roulements (50, 60) disposent chacun d'une bague intérieure côté arbre (52, 62) et d'une bague extérieure côté boîtier (54, 64),
f. les bagues intérieures côté arbre (52, 62) sont prévues dans une position axiale définie au niveau du premier arbre (30), et
g. les bagues extérieures côté boîtier (54, 64) des paliers à roulements (50, 60) sont à chaque fois guidées sur une surface de support côté boîtier et sont limitées dans leur déplacement l'une vers l'autre uniquement par le biais des bagues intérieures (52, 62) et de l'arbre (30), et
h. les bagues extérieures côté boîtier (54, 64) des paliers à roulements (50, 60) peuvent être ajustées du côté opposé au pignon conique (32) à chaque fois par un dispositif d'ajustement (70, 80) en termes de leur position axiale,
i. au moins l'un des éléments d'ajustement (72, 82) est réalisé sous forme de couvercle fermé,
**caractérisée par** les caractéristiques suivantes :
j. les dispositifs d'ajustement (70, 80) disposent à chaque fois, du côté opposé au pignon conique (32) de la bague extérieure respective (54, 64), d'un élément d'ajustement (72, 82) avec un filetage extérieur (74, 84), qui est inséré dans un filetage intérieur côté boîtier (26, 28),
k. le filetage intérieur (26, 28) et le filetage extérieur (74, 84) sont réalisés sous forme de filetages fins, et
l. au moins l'un des éléments d'ajustement (72, 82) est fixé en position par rapport au boîtier (20) par le biais d'une liaison collée de telle sorte qu'un mouvement de rotation relatif et par conséquent un déplacement axial de l'élément d'ajustement (72, 82) soit supprimé.

2. Transmission (10) selon l'une quelconque des revendications précédentes, comprenant la caractéristique suivante :
a. les éléments d'ajustement (72, 82), lorsque la transmission (10) est montée, sont accessibles depuis un côté extérieur du boîtier (20).

3. Transmission (10) selon l'une quelconque des revendications précédentes, comprenant la caractéristique suivante :
a. au moins l'un des éléments d'ajustement (72, 82) présente une région de manipulation non ronde (76, 86) pour introduire un couple d'ajustement, de préférence avec au moins deux surfaces d'introduction de couple parallèles l'une à l'autre, en particulier de préférence avec un profil à six pans intérieur ou extérieur ou un profil à quatre pans intérieur ou extérieur.

4. Transmission (10) selon l'une quelconque des revendications précédentes, comprenant la caractéristique suivante :
a. entre au moins l'un des éléments d'ajustement et le boîtier est prévu un joint d'étanchéité, en particulier de type joint torique ou sous la forme d'un autre élément d'étanchéité périphérique en matériau déformable élastiquement.

5. Transmission (10) selon l'une quelconque des revendications précédentes, comprenant la caractéristique suivante :
a. entre l'un des éléments d'ajustement et la bague extérieure associée du palier à roulement est prévu un dispositif de ressort agissant axialement.

6. Transmission (10) selon l'une quelconque des revendications précédentes, comprenant la caractéristique suivante :
a. les deux paliers à roulements (50, 60) forment un support sur palier incliné, de préférence suivant un agencement en X.

7. Transmission (10) selon l'une quelconque des revendications précédentes, comprenant la caractéristique suivante :
a. les paliers à roulements (50, 60) sont des paliers à rouleaux coniques.

8. Transmission (10) selon l'une quelconque des revendications précédentes, comprenant la caractéristique suivante :
a. le filetage intérieur (26, 28) et le filetage extérieur (74, 84) sont réalisés sous forme de filetages fins avec un pas de 3 mm au maximum.

9. Transmission (10) selon l'une quelconque des revendications précédentes, comprenant la caractéristique suivante :
a. le filetage intérieur (26, 28) et le filetage extérieur (74, 84) sont réalisés sous forme de filetages fins avec un pas de 1,5 mm au maximum.

10. Transmission (10) selon l'une quelconque des revendications précédentes, comprenant la caractéristique suivante :
a. le filetage intérieur (26, 28) et le filetage extérieur (74, 84) sont réalisés sous forme de filetages fins avec un pas de 0,75 mm au maximum.

11. Transmission (10) selon l'une quelconque des revendications précédentes, comprenant la caractéristique suivante :
a. le filetage intérieur (26, 28) et le filetage extérieur (74, 84) sont réalisés sous forme de filetages fins avec un pas de 0,5 mm au maximum.

12. Transmission (10) selon l'une quelconque des revendications précédentes, comprenant la caractéristique suivante :
a. le filetage intérieur (26, 28) et le filetage extérieur (74, 84) sont réalisés sous forme de filetages fins avec un pas de 0,35 mm au maximum.

13. Procédé d'ajustement du jeu de rotation d'une transmission selon l'une quelconque des revendications précédentes, comprenant les étapes suivantes :
a. l'arbre (30) est fixé axialement en position par vissage des deux éléments d'ajustement (72, 82),
b. les éléments d'ajustement (72, 82) sont tournés de manière synchrone, afin de déplacer axialement l'arbre par le biais des filetages (74, 84, 26, 28), en conservant la précontrainte de l'arbre, et
c. au moins l'un des éléments d'ajustement (72, 82) est fixé en position par rapport au boîtier (20) par une liaison par collage de telle sorte qu'un mouvement de rotation relatif et par conséquent un déplacement axial de l'élément d'ajustement (72, 82) soient supprimés.
